# EUROPEAN PATENT APPLICATION

(11) **EP 1 781 035 A1**
(43) Date of publication of application: **02.05.2007**
(21) Application number: 05300872.8
(22) Date of filing: 27.10.2005
(51) Int. Cl.: H04N 7/24

(54) **Real-time scalable streaming system and method**

(71) Applicant: Thomson Licensing S.A., 92100 Boulogne-Billancourt (FR)
(72) Inventor: Gao, Kui, 100080, Beijing (CN); Zhai, Jiefu, 100083, Beijing (CN); Wang, Charles, 100085, Beijing (CN)
(74) Representative: Rossmanith, Manfred

(57) **Abstract**

A real-time scalable streaming system and a real-time scalable streaming method for the same system are provided. The streaming system comprises a transmitter in connection with the Internet network and at least one receiver being accessible to the Internet network, specially a scheduling unit is provided in the transmitter for scheduling the transmission of the scalable-encoded bitstreams being packetized by a packet generator of the transmitter in a layer-base manner. The streaming method includes steps of encoding video into scalable-encoded data, packetizing scalable-encoded data into layer-based bitstreams, transmitting the bitstreams over the Internet network, decoding the received bitstreams into video which is applicable to be displayed, characterized in that the transmitting step further includes a step of scheduling the transmission of the bitstreams in a real-time scheduling scheme in order to increase the opportunities for more important layers of the bitstreams to be transmitted or retransmitted first.

## Description

### FIELD OF THE INVENTION

The present invention relates to data communication technology, and more particularly to a real-time scalable video coding streaming system and a streaming method for the same system.

### BACKGROUND OF THE INVENTION

With the rapid developments of multimedia computing and communication technologies, it is feasible to provide streaming media services over the Internet. Raw video can be encoded into scalable-encoded data bitstreams conforming to the Internet Protocol (IP), transmitted through the Internet, and received by various communication terminals, such as personal computers, mobile telephones, PDAs etc. It is due to the heterogeneous access rates, packet loss and fluctuating network bandwidth over the IP networks that motivate the use of scalable video coding (SVC) technology. As different clients may have different display resolutions, different systems may have different caching or intermediate storage resources, and different networks may also have varying bandwidths, loss rates, and best-effort or QoS (Quality of service) capabilities, hence the data transmitted from one source is received by various receiving terminals having different processing performance through different channels. The traditional frame-based packetization algorithm can not be applicable to this structure of network, because of the broad variation of available bandwidth and transmitted errors over the Internet. Scalable video coding (SVC) technology provides a solution for the need of a video COding-DECoding scheme (codec) that is capable of serving a broad range of applications that require different quality levels, spatial and temporal resolutions of video.

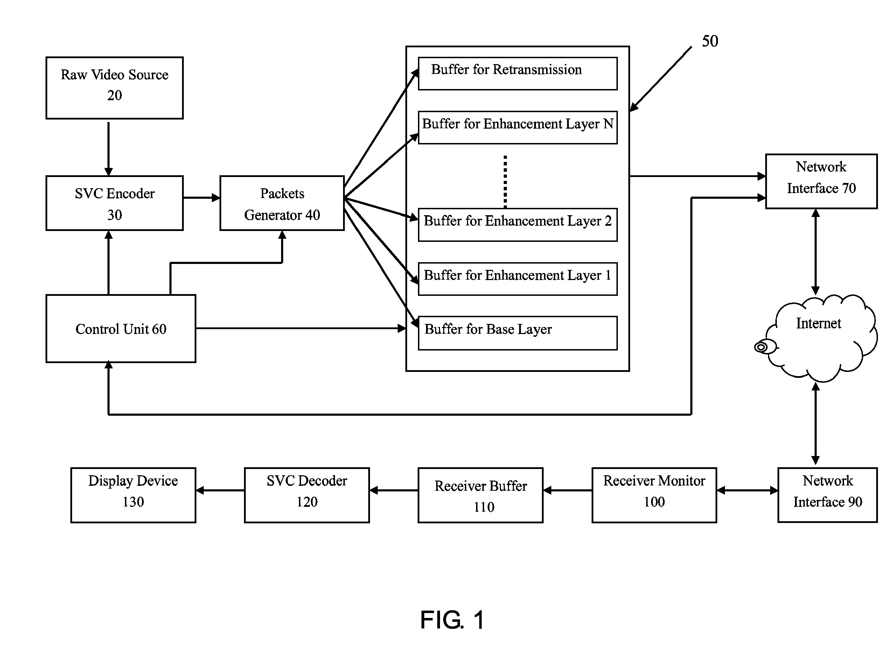

In a real-time scalable video coding streaming system, for example, encoded data are distributed through the network and processed by the receiving terminals in a layer-based manner. Fig. 1 is an illustrational diagram showing a conventional SVC streaming system and the way of SVC streaming. With reference to Fig. 1, the above SVC streaming system typically includes a raw video source 20, a transmitter in communication with the Internet network, and at least one receiver accessible to the Internet network. The transmitter generally comprises an encoder 30 for encoding the received raw video into scalable-encoded data including a base layer and multiple enhancement layers, a packets generator 40 for packetizing the encoded data into layer-based bitstreams conforming to the Internet protocol, a transmitter buffer 50 including multiple sub-buffers for buffering the base layer and the multiple enhancement layers respectively, a control unit 60 for controlling encoding, packetizing, buffering and transmitting of the data bitstreams, and a network interface 70. The receiver typically comprises a network interface 90, a monitor 100 for detecting receiving information, a receiver buffer 110, a decoder 120 for decoding the received scalable-encoded data into video being applicable to be displayed on a display device 130.

As shown in Fig. 1, raw video is first input from the raw video source 20 to the encoder 30, which performs encoding process under the control of the control unit 60 in a specified SVC algorithm. The raw video is thus encoded into scalable-encoded data including the base layer and the multiple enhancement layers. Then the scalable-encoded data are packetized by the packets generator 40 into layer-based bitstreams conforming to the Internet protocol. The transmitter buffer 50 essentially comprises a sub-buffer for buffering of the base layer, multiple sub-buffers for buffering of the multiple enhancement layers, and a sub-buffer for buffering of packets retransmission in case packets loss are detected by the monitor 100 in the receiver. Priority levels of transmission schedule are assigned to the layers in a descending order from the most important layer, i.e. the lowest layer or the base layer, to the least important layer, i.e. the highest enhancement layer. The base layer has a highest level of transmission priority, the lowest enhancement layer 1 has a less level of transmission priority than the base layer, and the highest enhancement layer N has a lowest level of transmission priority. All the scalable-encoded data bitstreams are transmitted from the transmitter side to the receiver side through the Internet network according to the decoding order and the transmission priority levels of the layers of encoded data.

Different layers of bitstreams have different contribution to the playback quality obtained in the client ends. The base layer bitstream which can be decoded independently and provides the minimum video quality is the most important layer which is packetized and transmitted separately with increased error protection compared with the less important enhancement layers. The enhancement layer bitstreams which can be decoded cumulatively and contribute to the improvement of video quality are much tolerated to the channel errors. The encoded data of the base layer is basically required to display images for both terminals with low-resolution display and low processing performance and terminals with high-resolution display and high processing performance. In a broadcasting system, scalable video coding streaming is possible when different clients receive only packets that are suitable to their performance. For example, a PDA may receive only the bitstreams of the base layer, a medium-resolution display device may receive the base layer and selectively receive at least one or two lowest layers of the enhancement layers, and a high-resolution personal computer may receive the bitstreams of the base layer and all the enhancement layers so as to display a high-quality image.

Generally speaking, SVC codec provides good scalabilities for spatial resolution, temporal and quality-of-service (also known as SNR, i.e., Signal-to-Noise Ratio metric). However, scalable video streaming essentially has timing constraints because of the sensitivity to delay and jitter. In the real-time SVC streaming system, every video picture/frame must meet its timing constraint typically specified as its deadline, after a streaming starts to playback. Retransmission can be used to recover lost packet over a best-effort network in case a packet loss is detected by the monitor 100 of the receiver. Once a packet loss is detected by the monitor 100, a request of retransmission will be feedback towards the control unit 60 through the Internet network, and the lost data packet will be moved into a retransmission sub-buffer in the transmitter buffer 50 and retransmitted according to the network conditions. However, in the existing SVC transmission scheme, in which the packets are transmitted by the best-effort method, the real-time constraint is not taken into account. Due to the limitation of available bandwidth, the transmission errors over the Internet and specially the delivery deadline constrains, it is difficult to make all the data packets arrive the receiver on time, and besides that not all lost packets can be recovered by retransmission. A retransmitted packet typically has an extra delay of one or more RTTs (round-trip-time), and can not be guaranteed to arrive at the client on time. In addition, even if there is still time to retransmit in a given time, a decision needs to be made on whether this packet should be retransmitted or not, since higher (less important) enhancement layers can be dropped to provide more opportunities for lower (more important) enhancement layers and base layer to arrive at the client end on time. If the important data packets do not arrive on time or lose, the playback will be paused, which is annoying to human ears and eyes. While some packets of scalable streaming can be dropped, especially these higher levels of enhancement layers with less important packets, acceptable perceptual quality can still be achieved at the client side.

Therefore, an improved scalable video coding streaming technology having a good capacity and adaptation to the dynamic time-varying network conditions to be applicable to various channel conditions and end user devices is desirable.

### SUMMARY OF THE INVENTION

In order to overcome the shortage of the conventional scalable video coding streaming technology as mentioned above, a real-time scalable streaming method employing a layer-based real-time scheduling algorithm for a streaming system and a real-time scalable streaming system using the streaming method are provided.

The real-time scalable streaming system comprises a transmitter in connection with the Internet network, and at least one receiver being accessible to the Internet network. The transmitter comprises an encoder for encoding video into scalable encoded data including a based layer and multiple enhancement layers, a packet generator for packetizing the scalable-encoded data into layer-based bitstreams conforming to the Internet protocol to be transmitted over the Internet network, and a transmitter buffer including multiple sub-buffers for respectively buffering of the base layer and the enhancement layers. The at least one receiver comprises a decoder for decoding the received bitstreams into video which is applicable to be displayed on a display means, and a monitor for detecting and reporting receiving information to the transmitter. Particularly, a scheduling unit is provided in the transmitter for scheduling the transmission of the bitstreams in a real-time scheduling scheme in order to increase the opportunities for more important layers of bitstreams to be transmitted or retransmitted first.

The real-time scalable streaming method for the streaming system comprises an encoding step of encoding video into scalable-encoded data having a base layer and multiple enhancement layers, a packetizing step of packetizing the scalable-encoded data into layer-based bitstreams conforming to the Internet protocol, a transmitting step of transmitting the bitstreams over the Internet network, a decoding step of decoding the received bitstreams into video which is applicable to be displayed on a display means, and specially a scheduling step of scheduling the transmission of the bitstreams in order to increase the opportunities for more important layers of bitstreams to be transmitted or retransmitted first by a scheduling unit provided in the transmitter. Wherein the scheduling step includes a deadline determining step of determining a deadline Dᵢ as the latest time at which all layers of packets P_{(i,j)} of a frame i (i denotes the number of frame and j denotes the number of layer) must be transmitted to the receiver, a selecting step of selecting a packet P_{(i,j)} to be transmitted first depending on a layer-based real-time (LB-RT) algorithm from a set of packets group, and a timeout setting step of setting a timeout T_{(i,j)} for each packet P_{(i,j)} while transmitting the packet P_{(i,j)}. If current time T_{cur} exceed the deadline Dᵢ of the packet P(i,j), the packet P_{(i,j)} will be discarded anyway. If an ACK is received from the receiver before the expiration of the timer T_{(i,j)}, the transmitted packet P_{(i,j)} will be removed from the transmitter buffer, and if an ACK is not received from the receiver after the expiration of the timer T_{(i,j)}, the packet P_{(i,j)} is determined as having been lost and moved to the sub-buffer of the transmitter buffer for retransmission.

Since the more important packets are scheduled to be transmitted earlier in the streaming process, they have more opportunities to be transmitted and retransmitted based on the layer-based real-time scheduling algorithm, the decision of retransmission is determined depending on the importance of the layers. Some packets with less importance can be dropped, and acceptable perceptual quality can still be achieved at the client side. Advantageously, the inventive streaming method employing the LB-RT scheduling algorithm not only improves the utility of the bandwidth but also smoothes the playback quality.

### BRIEF DESCRIPTION OF DRAWINGS

Fig. 1 is an illustrational diagram showing an existing real-time scalable video coding streaming system;
Fig. 2 is an illustrational diagram showing an improved real-time scalable video coding streaming system in accordance with the present invention; and
Fig. 3 is a flow diagram illustrating the transmission mechanism of the real-time scalable video coding streaming system in accordance with the present invention.

### DETAIL DESCRIPTION OF PREFERRED EMBODIMENTS

According to the present invention, a real-time scalable video coding (SVC) streaming method employing a layer-based real-time (LB-RT) scheduling algorithm for optimal transport of the scalable video coding streaming over the Internet network is provided, and a real-time scalable video coding streaming system involving a layer-based real-time scheduling unit for performing the real-time scheduling of the transmission of the scalable-encoded bitstreams is provided.

The loss impact of lower enhancement layer within a group of picture (GOP) on video quality is much greater than that of the higher enhancement layers within it. For scheduling, as different layer data has a different effect on the playback, we set the highest priority of the transmission schedule to the base layer and then set the higher priority of the transmission schedule to the lower (more important) layer packets and set the lower priorities of the transmission schedule to the higher (less important) layers. In fact, the priority of the transmission schedule for the packet is consistent with the distortion. Since it is very much complex to compute and compare the distortion of every packet, a Layer-based Real-time (LB-RT) scheduling algorithm is proposed, which combines distortion of layer and real-time algorithm. Thus, the base layer and the important enhancement layer encoded data with higher priority of the transmission schedule are provided with more opportunities to be transmitted earlier. If these important data packets are lost, there are more opportunities for them to be retransmitted on time. If several packets in the transmitter buffer have the same layer number, packets with the earliest deadline are served first.

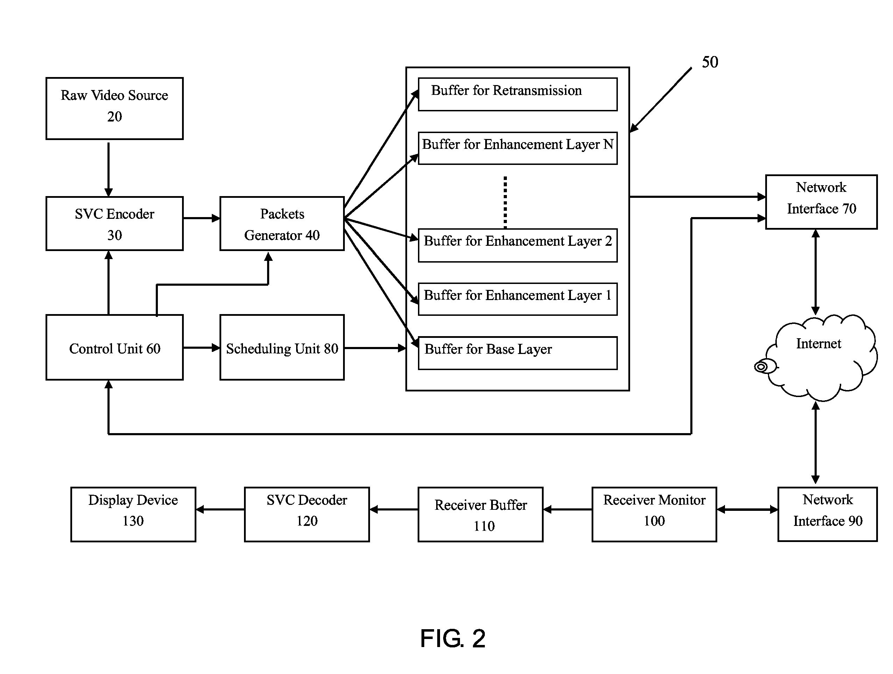

As shown in Fig. 2, the inventive real-time scalable video coding (SVC) streaming system essentially constructs a similar structure as the conventional real-time SVC streaming system described in Fig. 1, the only difference is that a scheduling unit 80 is specially provided in the transmitter for performing a real-time scheduling of the transmission of the bitstreams depending on a Layer-based Real-time (LB-RT) scheduling algorithm. Raw video input from the raw video source 20 is encoded into specified scalable-encoded data by the encoder 30, and then the encoded data are packetized by the packets generator 40 into layer-based bitstreams conforming to the Internet protocol. Packets P_{(i,j)} of the bitstreams denotes the packet of layer j in frame i. Afterwards, all the packets P_{(i,j)} of different layers are respectively buffered in the multiple sub-buffers of the transmitter buffers 50 and ready for the scheduling and transmitting. The monitor 100 of the receiver is intended to detect packets loss information and report to the transmitter.

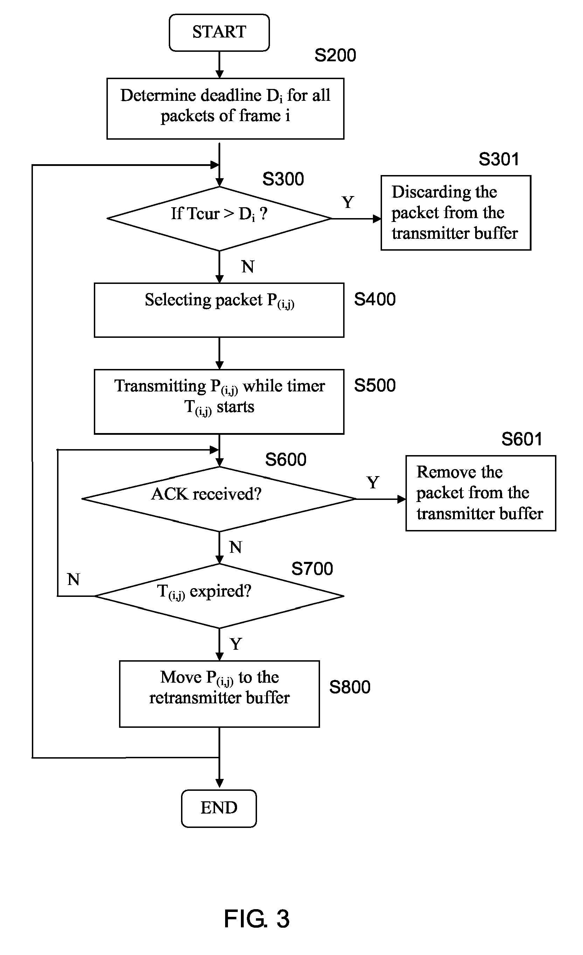

Now with reference to a flow chart as illustrated in Fig. 3, the scheduling process of the real-time SVC streaming method of the present invention will be described and explained in detail with a simplified example step by step.

With reference to Fig. 3, the scheduling process starts, when the packets are put into the transmitter buffer 50 and ready for the scheduling. In step 200, a deadline Dᵢ for all packets of frame i is determined as the latest time at which all layers of the frame i must be sent to the client, i.e. all packets of different layers for a same frame i have the same deadline Dᵢ. Then, step 300 is to compare the current time T_{cur} with the deadline Dᵢ of the packet P_{(i,j)}. If T_{cur} > Di, the packet P_{(i,j)} will be discarded from the buffer as shown in step 301. If T_{cur} ≤ Dᵢ, then it goes to the next step. In step 400, a packet to be transmitted earlier is selected from a set of packets group by employing a Layer-based real-time scheduling algorithm. As one practicable embodiment, the present invention uses an earlier deadline first (EDF) scheduling algorithm to select the packet with the earliest deadline Dᵢ within the set of packets group. As it can be understood by skilled person in the art, any other practicable scheduling algorithm to do the selection of the packet to be transmitted first among the set of packets group is also applicable without exceeding the technology scope and the principle of the present. Each selected packet P_{(i,j)} is assigned with a timer T_{(i,j)} which starts while the transmission of the Packet P_{(i,j)} starts.

During the streaming process, a retransmission of lost packets is applied. Step 500 is to determine if the transmitter receives an ACK from the receiver. If the transmitter receives an ACK from the receiver before the expiration of the timer T_{(i,j)}, the packet P_{(i,j)} is considered as having been transmitted and received by the receiver successfully, thus the transmitted packet P_{(i,j)} will be removed from the transmitter buffer 50 as in step 601. If the transmitter does not receive the ACK from the receiver as determined in step 500 and the timer T_{(i,j)} for the transmission of the packet P_{(i,j)} is expired as determined in step 600, the packet P_{(i,j)} is considered as having been lost, thus the lost packet P_{(i,j)} will be moved into the retransmission sub-buffer of the buffer 50 in step 700, and then it goes back to step 300, the lost packet P_{(i,j)} will be retransmitted in a same manner as it has been done previously before the expiration of the corresponding transmission deadline Dᵢ. Once the current time T_{cur} of the packet P_{(i,j)} exceeds the deadline Dᵢ of the packet P_{(i,j)}, the packet P_{(i,j)} will be discarded anyway. The scheduling process performs the steps 300 to 800 repeatedly until all packets in the transmitter buffer 50 are transmitted or retransmitted.

Because of the dependency between layers in a frame, the higher layer packet P_{(i,j)} cannot be decoded if the lower layer packet P_{(i,j-1)} does not arrive at the decoder on time. The inventive LB-RT scheduling algorithm depends on the decoding order and the importance of the packets, therefore the packets of lower (more important) layer and the packets with earlier deadline in the transmitter buffer 50 are transmitted as soon as possible. Since the more important packets are scheduled to be transmitted earlier in the streaming process, they have more opportunities to be retransmitted. While these packets of less important levels of layers which are scheduled to be transmitted later than that of the important levels of layers, they have less opportunities to be retransmitted, and thus the decision of retransmission is made depending on the importance of the levels of the layers. Some packets of the high level enhancement layer of the SVC scalable streaming with less importance can be dropped, and acceptable perceptual quality can still be achieved at the client side. Overall, the inventive real-time scalable streaming system and method not only improve the utility of the bandwidth but also smoothes the playback quality.

## Claims

1. A real-time scalable streaming system comprising a transmitter in connection with the Internet network, and at least one receiver being accessible to the Internet network, wherein the transmitter comprises an encoder (30) for encoding video into scalable-encoded data including a based layer and multiple enhancement layers, a packet generator (40) for packetizing the scalable-encoded data into layer-based bitstreams conforming to the Internet protocol to be transmitted over the Internet network, the at least one receiver comprises a decoder (120) for decoding the received bitstreams into video which is applicable to be displayed on a display means (130), **characterized in that**
- a scheduling unit (80) is provided in the transmitter for scheduling the transmission of the bitstreams in a real-time scheduling scheme in order to increase the opportunities for more important layers of bitstreams to be transmitted or retransmitted first.

2. The real-time scalable streaming system as claimed in claim 1, **characterized in that** a transmitter buffer (50) is provided, which includes a sub-buffer for buffering the base layer bitstreams, and multiple sub-buffers for buffering the multiple enhancement layers bitstreams respectively.

3. The real-time scalable streaming system as claimed in claim 2, **characterized in that** the transmitter buffer (50) further comprises a sub-buffer for buffering retransmission packets, and the receiver comprises a monitor for detecting packet-lost information of the receiver and reporting to the transmitter.

4. A real-time scalable streaming method for a streaming system comprising a transmitter in connection with the Internet network, and at least one receiver being accessible to the Internet network, wherein the transmitter comprises an encoder (30) and a packet generator (40), the receiver comprises a decoder (120), the streaming method comprising steps of
- an encoding step of encoding video into scalable-encoded data having a base layer and multiple enhancement layers;
- a packetizing step of packetizing the scalable-encoded data into layer-based bitstreams conforming to the Internet protocol;
- a transmitting step of transmitting the bitstreams over the Internet network;
- a decoding step of decoding the received bitstreams into video which is applicable to be displayed on a display means (130);
**characterized in that** the transmitting step includes
- a scheduling step of scheduling the transmission of the bitstreams in a real-time scheduling scheme in order to increase the opportunities for more important layers of bitstreams to be transmitted or retransmitted first by a scheduling unit (80) provided in the transmitter.

5. A real-time scalable streaming method for a streaming system comprising a transmitter in connection with the Internet network, and at least one receiver being accessible to the Internet network, wherein the transmitter comprises an encoder (30), a packet generator (40) and a transmitter buffer (50), the receiver comprises a decoder (120), the streaming method comprising steps of
- an encoding step of encoding video into scalable-encoded data having a base layer and multiple enhancement layers;
- a packetizing step of packetizing the scalable-encoded data into layer-based bitstreams conforming to the Internet protocol;
- a buffering step of buffering the packetized base layer and multiple enhancement layers bitstreams in multiple sub-buffers;
- a transmitting step of transmitting the bitstreams over the Internet network;
- a decoding step of decoding the received bitstreams into video which is applicable to be displayed on a display means (130);
**characterized in that** the transmitting step includes
- a scheduling step of scheduling the transmission of the bitstreams in a real-time scheduling scheme in order to increase the opportunities for more important layers of bitstreams to be transmitted or retransmitted first by a scheduling unit (80) provided in the transmitter.

6. A real-time scalable streaming method for a streaming system comprising a transmitter in connection with the Internet network, and at least one receiver being accessible to the Internet network, wherein the transmitter comprises an encoder (30), a packet generator (40) and a transmitter buffer (50), the receiver comprises a monitor (100) and a decoder (120), the streaming method comprising steps of
- an encoding step of encoding video into scalable-encoded data having a base layer and multiple enhancement layers;
- a packetizing step of packetizing the scalable-encoded data into layer-based bitstreams conforming to the Internet protocol;
- a buffering step of buffering the packetized base layer and multiple enhancement layers bitstreams in multiple sub-buffers;
- a buffering step of buffering packets which are determined to be retransmitted in a retransmission sub-buffer after a packet-lost information being received from one of the at least one receiver;
- a transmitting step of transmitting the bitstreams over the Internet network;
- detecting packet-lost information of the receiver and reporting to the transmitter;
- decoding the received bitstreams into video which is applicable to be displayed on a display means (130);
**characterized in that** the transmitting step includes
- a scheduling step of scheduling the transmission of the bitstreams in a real-time scheduling scheme in order to increase the opportunities for more important layers of bitstreams to be transmitted or retransmitted first by a scheduling unit (80) provided in the transmitter.

7. The real-time scalable steaming method as claimed in any one of claims 4 to 6, **characterized in that** the scheduling step includes
- a deadline determining step of determining a deadline Di as the latest time at which all layers of packets P(i,j) of the frame i must be transmitted to the receiver;
- a selecting step of selecting a packet P(i,j) to be transmitted first depending on a layer based earlier deadline first (LB-EDF) algorithm from a set of packets group; and
- a timeout setting step of setting a timeout T(i,j) for each packet P(i,j) while transmitting the packet P(i,j).

8. The real-time scalable steaming method as claimed in claim 7, **characterized in that** the scheduling step further includes a step of discarding packet P(i,j) if the deadline Di of the packet P(i,j) is earlier then the current time Tcur.

9. The real-time scalable steaming method as claimed in one of claims 7 and 8, **characterized in that** the scheduling step includes a step of removing the packet P(i,j) from the transmitter buffer (50) if an ACK is received from the receiver before the expiration of the timeout T(i,j).

10. The real-time scalable steaming method as claimed in any one of claims 7 to 9, **characterized in that** the scheduling step includes a step of moving the packet P(i,j) into a retransmission sub-buffer of the transmitter buffer (50) if an ACK is not received from the receiver after the expiration of the timeout T(i,j).
